# EUROPÄISCHE PATENTSCHRIFT

(11) **EP 2 038 046 B1**
(45) Veröffentlichungstag und Bekanntmachung des Hinweises auf die Patenterteilung: **18.04.2018**
(21) Anmeldenummer: 07726162.6
(22) Anmeldetag: 27.06.2007
(51) Int. Cl.: B01D 53/94, B01J 37/02, B01J 23/63, B01J 23/44, B01J 23/46

(54) **DOPPELSCHICHTIGER DREIWEG-KATALYSATOR UND DESSEN VERWENDUNG**
TWO-LAYERED THREE-WAY CATALYST AND ITS USE
CATALYSEUR TROIS VOIES BICOUCHE ET SON UTILISATION

(30) Priorität: 29.06.2006 EP 06013413
(43) Veröffentlichungstag der Anmeldung: 25.03.2009
(73) Patentinhaber: Umicore AG & Co. KG, 63457 Hanau-Wolfgang (DE)
(72) Erfinder: LINDNER, Dieter, verstorben (DE); ROESCH, Martin, 63110 Rodgau (DE); KLINGMANN, Raoul, 63755 Alzenau (DE); WOLF, Anke, 64285 Darmstadt (DE); RICHTER, Joerg-Michael, 60389 Frankfurt a.M. (DE)
(86) Internationale Anmeldenummer: PCT/EP2007/005661
(87) Internationale Veröffentlichungsnummer: WO 2008/000449

(56) Entgegenhaltungen:
- EP-A- 1 640 575
- EP-A- 1 704 910
- EP-A- 1 726 359
- EP-A1- 0 441 173
- EP-A2- 0 885 650
- WO-A-98/45026
- DE-A1- 10 024 994
- DE-A1- 19 606 863
- US-A1- 5 753 580
- US-A1- 2005 282 701

## Beschreibung

Die Erfindung betrifft einen Dreiweg-Katalysator mit hervorragender katalytischer Aktivität und Alterungsstabilität für die Reinigung der Abgase von Verbrennungsmotoren.

Dreiweg-Katalysatoren werden in großen Stückzahlen für die Reinigung der Abgase von im wesentlichen stöchiometrisch betriebenen Verbrennungsmotoren eingesetzt. Sie sind in der Lage, die drei wesentlichen Schadstoffe des Motors, nämlich Kohlenwasserstoffe, Kohlenmonoxid und Stickoxide, gleichzeitig zu unschädlichen Komponenten umzusetzen. Häufig kommen dabei doppelschichtige Katalysatoren zum Einsatz, die eine Trennung verschiedener katalytischer Vorgänge und damit eine optimale Abstimmung der katalytischen Wirkungen in den beiden Schichten ermöglichen. Katalysatoren dieser Art werden zum Beispiel in EP 0 885 650 und EP 1 046 423 beschrieben.

Die ständig steigenden Anforderungen an die Emissionsminderung von Verbrennungsmotoren machen eine stetige Weiterentwicklung der Katalysatoren notwendig. Besondere Bedeutung haben dabei die Anspringtemperaturen des Katalysators für die Umsetzung der Schadstoffe und seine Temperaturstabilität. Die Anspringtemperatur für einen Schadstoff gibt an, ab welcher Temperatur dieser Schadstoff zu mehr als zum Beispiel 50 % umgesetzt wird. Je niedriger diese Temperaturen sind, um so früher können die Schadstoffe nach einem Kaltstart umgesetzt werden. Bei Vollast können direkt am Motorausgang Abgastemperaturen von bis zu 1150 °C auftreten. Je besser die Temperaturstabilität des Katalysators ist, um so näher kann er am Motor angeordnet werden. Dies verbessert ebenfalls die Abgasreinigung nach einem Kaltstart.

Die Katalysatoren gemäß DE 100 24 994, EP 0441 173, EP 0 885 650 und EP 1 046 423 weisen schon sehr gute Eigenschaften bezüglich Anspringtemperaturen und Temperaturstabilität auf. Die gesteigerten gesetzlichen Vorgaben machen jedoch die Suche nach noch besseren Katalysatoren notwendig. Es war daher die Aufgabe dieser Erfindung, einen Katalysator zur Verfügung zu stellen, der gegenüber den Katalysatoren aus dem Stand der Technik weiter verringerte Anspringtemperaturen und eine verbesserte Temperaturstabilität aufweist.

Diese Aufgabe wird durch einen Katalysator gemäß den Ansprüchen gelöst. Der Katalysator weist zwei übereinanderliegende katalytisch aktive Beschichtungen auf einem inerten Katalysatorträger aus Keramik oder Metall auf. Der Katalysator ist dadurch gekennzeichnet, daß beide Schichten jeweils ein aktives Aluminiumoxid und ein Cer/Zirkon-Mischoxid enthalten und beide Oxidmaterialien der ersten Schicht mit Palladium und beide Oxidmaterialien der zweiten Schicht mit Rhodium katalytisch aktiviert sind, wobei das Cer/Zirkon-Mischoxid der zweiten Schicht einen höheren Zirkonoxidgehalt aufweist als das Cer/Zirkon-Mischoxid der ersten Schicht.

Im Rahmen der vorliegenden Erfindung wird als erste Schicht jeweils die Schicht bezeichnet, die direkt auf dem Wabenkörper aufgebracht ist. Die zweite Schicht ist auf der ersten Schicht abgelagert und steht mit dem zu reinigenden Abgas in direktem Kontakt.

Überraschenderweise zeigte sich, daß durch die Kombination der genannten Eigenschaften deutliche Verbesserungen bezüglich Anspringverhalten und Temperaturstabilität erzielt werden können.

Das aktive Aluminiumoxid und die Cer/Zirkon-Mischoxide der ersten und zweiten Schicht werden als pulverförmige Feststoffe in die Beschichtungen eingebracht und Palladium beziehungsweise Rhodium sind sowohl auf dem Aluminiumoxid als auch auf dem Cer/Zirkon-Mischoxid der jeweiligen Schicht abgeschieden. Darüber hinaus weist das Cer/Zirkon-Mischoxid der zweiten Schicht einen höheren Zirkonoxid-Gehalt auf als das Cer/Zirkon-Mischoxid der ersten Schicht.

Beide Mischoxide können zur Verbesserung Ihrer Temperaturstabilität mit wenigstens einem Oxid der Elemente ausgewählt aus der Gruppe bestehend aus Eisen, Mangan, Zinn, Titan, Silizium, Yttrium, Lanthan, Praseodym, Neodym, Samarium und Mischungen davon stabilisiert sein. Die Menge der Dotierungselemente, berechnet als Oxid, liegt bevorzugt zwischen 1 und 15, insbesondere zwischen 5 und 10 Gew.-%, bezogen auf das Gesamtgewicht des stabilisierten Mischoxids.

Das erste Cer/Zirkon-Mischoxid weist bevorzugt ein Gewichtsverhältnis von Ceroxid zu Zirkonoxid von 0,8 bis 1,2 und das zweite Cer/Zirkon-Mischoxid ein Gewichtsverhältnis von Ceroxid zu Zirkonoxid von 0,5 bis 0,1 auf. Die spezifische Oberfläche dieser Materialien liegt vorteilhafterweise in einem Bereich zwischen 50 und 100 m²/g.

Auch das aktive Aluminiumoxid der ersten und zweiten Schicht ist bevorzugt durch Dotieren mit 1 bis 10 Gew.-% Lanthanoxid, bezogen auf das Gesamtgewicht des Aluminiumoxids, stabilisiert. Eine weitere Verbesserung der Temperaturstabilität des Katalysators läßt sich erreichen, wenn aktives Aluminiumoxid und Cer/Zirkon-Mischoxid der ersten Schicht zusätzlich mit Strontiumoxid und/oder Bariumoxid imprägniert sind.

Gewöhnlich handelt es sich bei dem Katalysatorträger um einen Wabenkörper mit einem Volumen V, der parallele Strömungskanäle für die Abgase des Verbrennungsmotors aufweist, wobei die Wandflächen der Strömungskanäle mit den beiden Katalysatorschichten beschichtet sind und die Konzentration des Palladiums in der ersten Schicht bezogen auf das Volumen des Wabenkörpers zwischen 0,1 und 10 g und die Konzentration des Rhodiums in der zweiten Schicht zwischen 0,01 und 1 g liegt.

In der zweiten Schicht können das aktive Aluminiumoxid und das zweite Cer/Zirkon-Mischoxid in einer besonderen Ausführungsform des Katalysators zusätzlich zu Rhodium noch mit Platin katalytisch aktiviert sein, wobei die Konzentration des Platins bezogen auf das Volumen des Wabenkörpers zwischen 0,01 und 1 g liegt.

Die tatsächlich anzuwendenden Edelmetallkonzentrationen hängen von den gewünschten Schadstoffumsätzen ab. Die höchsten hier angegebenen Konzentrationswerte sind für die Einhaltung der strengen Abgasnormen für SULEV-Fahrzeuge erforderlich (SULEV = Super Ultra-Low Emission Vehicles).

Zur Beschichtung des Katalysatorträgers mit den beiden katalytisch aktiven Schichten werden die für die jeweilige Schicht vorgesehenen Feststoffe zum Beispiel in Wasser suspendiert. Im Falle der ersten Schicht handelt es sich um das aktive Aluminiumoxid und das erste Cer/Zirkon-Mischoxid. Auf diesen Materialien wird Palladium ausgehend von bevorzugt Palladiumnitrat nach dem in der US 6,103,660 beschriebenen Verfahren unter Verwendung von Bariumhydroxid oder Strontiumhydroxid als Base abgeschieden. Mit der so erhaltenen Suspension kann sofort der Katalysatorträger beschichtet werden. Die aufgebrachte Schicht wird anschließend getrocknet und gegebenenfalls kalziniert. Danach wird die zweite Beschichtung aufgebracht. Hierzu werden wieder aktives Aluminiumoxid und das zweite Cer/Zirkon-Mischoxid in Wasser suspendiert und darauf Rhodium durch Zuführen von Rhodiumnitrat abgeschieden.

Durch Verwenden von Bariumhydroxid oder Strontiumhydroxid als Base für die Fällung von Palladiumnitrat verbleiben Bariumoxid oder Strontiumoxid nach der abschließenden Kalzinierung in der ersten Beschichtung.

Alternativ zu der beschriebenen Vorgehensweise können die Edelmetalle auch auf jeder Feststoff-Komponente des Katalysators separat abgeschieden werden. Erst danach werden dann zum Beispiel mit Palladium aktiviertes Aluminiumoxid und mit Palladium aktiviertes Cer/Zirkon-Mischoxid gemeinsam in Wasser suspendiert und auf den Katalysatorträger aufgebracht. Diese Vorgehensweise ermöglicht es, die Konzentration der katalytisch aktiven Edelmetalle auf Aluminiumoxid einerseits und Cer/Zirkon-Mischoxid andererseits gezielt einzustellen. Bevorzugt wird für die separate Abscheidung der Edelmetalle auf Aluminiumoxid und Cer/Zirkon-Mischoxid das in der EP 957064 beschriebene Verfahren eingesetzt.

Im folgenden wird die Erfindung an Hand der Beispiele und den Figuren näher erläutert. Es zeigen:
- **Figur 1:**: Vergleich der Anspringtemperaturen des erfindungsgemäßen Katalysators mit einem Katalysator aus dem Stand der Technik.
- **Figur 2:**: CO/NOx-Kreuzungspunkte (Lambda-Schnitt) bei 400 °C
- **Figur 3:**: Relative Emissionen beim FTP75-Test

### Beispiel 1

Es wurden zwei erfindungsgemäße Katalysatoren durch Beschichten von Cordierit-Wabenkörpern hergestellt. Die Wabenkörper besaßen eine Zelldichte von 93 cm⁻², einen Durchmesser von 10,16 cm und eine Länge von 15,24 cm. Ihre Zellwände hatten eine Dicke von 0,11 mm.

Die Wabenkörper wurden jeweils nacheinander mit zwei verschiedenen Beschichtungssuspensionen beschichtet.

### Anfertigen der ersten Schicht:

Mit 3 Gew.-% Lanthanoxid stabilisiertes Aluminiumoxid (spezifische Oberfläche 140 m²/g) und ein erstes Cer/Zirkon-Mischoxid mit einem Zirkonoxidgehalt von 50 Gew.-% wurden gemäß US 6,103,660 unter Verwendung von Strontiumhydroxid als Base gemeinsam mit Palladium ausgehend von Palladiumnitrat aktiviert. Die resultierende Suspension wurde direkt zur Beschichtung der Wabenkörper eingesetzt. Nach der Beschichtung wurden die Wabenkörper getrocknet und kalziniert. Die fertige erste Schicht enthielt die folgenden Beschichtungsmengen:

| | | |
|---|---|---|
| 80 | g/l | mit Lanthan stabilisiertes Aluminiumoxid |
| 55 | g/l | erstes Cer/Zirkon-Mischoxid |
| 10 | g/l | Strontiumoxid (auf allen Komponenten) |
| 0,88 | g/l | Palladium (auf allen Komponenten) |

### Anfertigen der zweiten Schicht:

Mit Lanthanoxid stabilisiertes Aluminiumoxid und ein zweites Cer/Zirkon-Mischoxid mit einem Zirkonoxidgehalt von 70 Gew.-% wurden in Wasser suspendiert. Danach wurde der Suspension eine wäßrige Lösung von Rhodiumnitrat unter ständigem Rühren zugeführt und die schon mit der ersten Schicht versehenen Wabenkörper mit der zweiten Beschichtungssuspension beschichtet, getrocknet und kalziniert. Die fertige zweite Schicht enthielt die folgenden Beschichtungsmengen:

| | | |
|---|---|---|
| 70 | g/l | mit Lanthan stabilisiertes Aluminiumoxid |
| 65 | g/l | zweites Cer/Zirkon-Mischoxid |
| 0,25 | g/l | Rhodium (auf allen Komponenten) |

Die gesamte Edelmetallbeladung des Katalysators betrug 1,13 g/l mit einem Gewichtsverhältnis von Palladium zu Rhodium von 25 : 7.

### Vergleichsbeispiel 1

Es wurde ein Vergleichskatalysator auf einem Wabenkörper wie im obigen Beispiel hergestellt. Im Unterschied zu Beispiel 1 wurde in der ersten Schicht das erste Cer/Zirkon-Mischoxid durch ein reines Ceroxid ersetzt und das Rhodium in der zweiten Schicht selektiv nur auf dem stabilisierten Aluminiumoxid abgeschieden.

### Vergleichsbeispiel 2

Es wurde ein weiterer Vergleichskatalysator auf einem Wabenkörper wie im Beispiel hergestellt. Im Unterschied zu Vergleichsbeispiel 1 wurde in beiden Schichten ein Cer/Zirkon-Mischoxid mit einem Zirkonoxid-Gehalt von 50 Gew.-% eingesetzt.

### Prüfung der Katalysatoren

Die Katalysatoren von Beispiel 1 und der Vergleichsbeispiele 1 und 2 wurden an einem Motorprüfstand bezüglich ihrer Anspringtemperaturen vermessen. Der Katalysator von Beispiel 1 wies für alle Schadstoffe eine um 20 bis 30 °C niedrigere Anspringtemperatur als die Katalysatoren der Vergleichsbeispiele 1 und 2 auf.

### Beispiel 2

Analog zu Beispiel 1 wurden zwei weitere Katalysatoren gemäß der Erfindung hergestellt. Im Unterschied zu Beispiel 1 wurde in der ersten Schicht ein Cer/Zirkon-Mischoxid mit einem Zirkonoxidgehalt von 50 Gew.-% eingesetzt, welches zusätzlich mit 10 Gew.-% Lanthan- und Yttriumoxid stabilisiert war, wobei sich die Prozentangaben jeweils auf das Gesamtgewicht des stabilisierten Mischoxids beziehen.

Zur Anfertigung der zweiten Schicht wurde im Unterschied zu Beispiel 1 ein Cer/Zirkon-Mischoxid mit einem Zirkonoxidgehalt 72 Gew.-% eingesetzt, welches mit 7 Gew.-% Lanthan- und Neodymoxid stabilisiert war.

Die gesamte Edelmetallbeladung des Katalysators betrug 1,13 g/l mit einem Gewichtsverhältnis von Palladium zu Rhodium von 25 : 7.

### Vergleichsbeispiel 3

Es wurde ein Vergleichskatalysator auf einem gleichen Wabenkörper wie im obigen Beispiel gemäß Beispiel 1 von EP 0 885 650 B1 hergestellt.

### Anfertigen der ersten Schicht:

Mit Lanthan stabilisiertes Aluminiumoxid (3 Gew.-% Lanthanoxid, spezifische Oberfläche des stabilisierten Materials 140 m²/g) und Ceroxid wurden in Wasser suspendiert. Der Wabenkörper wurde durch Tauchen in diese Suspension beschichtet. Nach der Beschichtung wurde der Wabenkörper getrocknet und kalziniert. Anschließend wurde die Beschichtung mit einer gemeinsamen Lösung von Palladiumnitrat und Bariumacetat imprägniert, erneut getrocknet und kalziniert. Die fertige erste Schicht enthielt die folgenden Beschichtungsmengen:

| | | |
|---|---|---|
| 120 | g/l | mit Lanthan stabilisiertes Aluminiumoxid |
| 80 | g/l | Ceroxid |
| 15 | g/l | Bariumoxid (auf allen Komponenten) |
| 0,88 | g/l | Palladium (auf allen Komponenten) |

### Anfertigen der zweiten Schicht:

Mit Lanthanoxid stabilisiertes Aluminiumoxid wurde mit 2,4 Gew.-% Rhodium, bezogen auf das eingesetzte Aluminiumoxid, belegt. Hierzu wurde das stabilisierte Aluminiumoxid in Wasser suspendiert. Zu dieser Suspension wurde eine Lösung von Rhodiumnitrat gegeben und damit Rhodium auf dem Aluminiumoxid abgeschieden. Danach erst wurden ein Cer/Zirkon-Mischoxid mit 70 Gew.-% Ceroxid und reines Aluminiumoxid zur Suspension hinzugefügt, die somit frei von einer Beschichtung mit Rhodium blieben.

Mit dieser Beschichtungsdispersion wurde der Wabenkörper ein zweites Mal beschichtet, getrocknet und kalziniert. Die zweite Schicht enthielt folgende Beschichtungsmengen:

| | | |
|---|---|---|
| 10 | g/l | mit Lanthan stabilisiertes Aluminiumoxid |
| 20 | g/l | Cer/Zirkon-Mischoxid |
| 20 | g/l | Aluminiumoxid + 0,25 g/l Rhodium |

### Vergleichsbeispiel 4

Es wurde ein weiterer Vergleichskatalysator angefertigt, der in beiden Schichten ein Cer/Zirkon-Mischoxid mit jeweils 50 Gew.-% Zirkonoxid enthielt. In der zweiten Schicht wurde Rhodium nur auf Aluminiumoxid abgeschieden. Der Katalysator hatte die folgende Zusammensetzung:
1. Schicht

| | | |
|---|---|---|
| 95 | g/l | mit Lanthan stabilisiertes Aluminiumoxid |
| 45 | g/l | Cer/Zirkon-Mischoxid (50 Gew.-% Zirkonoxid) |
| 15 | g/l | Bariumoxid (auf allen Komponenten) |
| 0,88 | g/l | Palladium (auf allen Komponenten) |

2. Schicht

| | | |
|---|---|---|
| 50 | g/l | Cer/Zirkon-Mischoxid (50 Gew.-% Zirkonoxid) |
| 75 | g/l | mit Lanthan stabilisiertes Aluminiumoxid + 0,25 g/l Rhodium |

### Prüfung der Katalysatoren

Vor der Prüfung wurden alle Katalysatoren einer Alterung an einem Motor durch Schubabschaltung für die Dauer von 38 Stunden ausgesetzt. Die Temperatur vor den Katalysatoren betrug bei dieser Alterung 950 °C.

Nach der Alterung wurden ein Katalysator gemäß Beispiel 2 und die Katalysatoren gemäß den Vergleichsbeispielen 3 und 4 an einem Motorprüfstand bezüglich Anspringtemperaturen und ihren CO/NOx-Kreuzungspunkten untersucht.

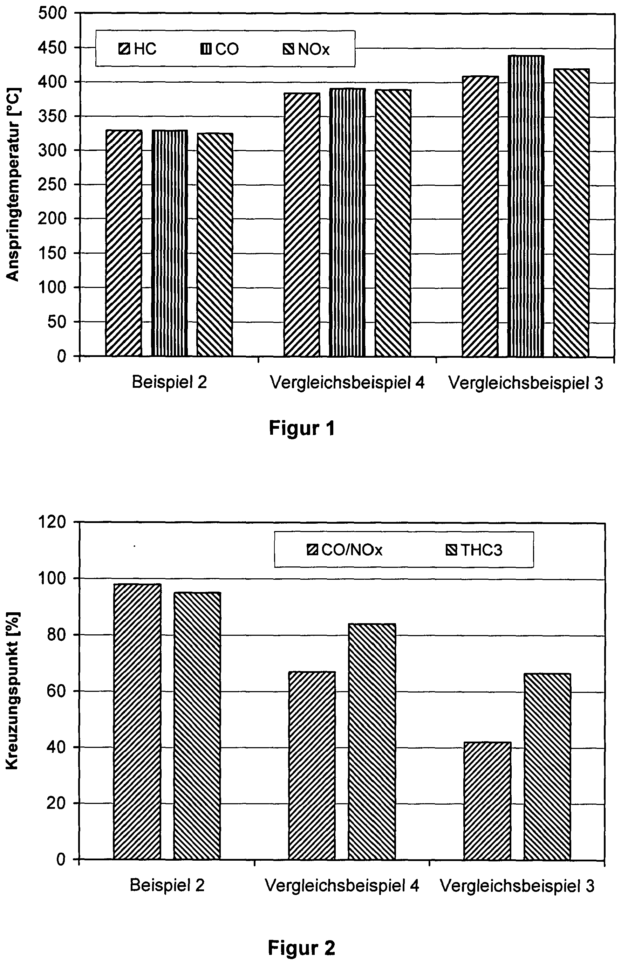

Figur 1 zeigt den Vergleich der Anspringtemperaturen. Der erfindungsgemäße Katalysator gemäß Beispiel 2 weist nach Alterung deutlich niedrigere Anspringtemperaturen als die Katalysatoren gemäß den Vergleichsbeispielen 3 und 4 auf.

Auch die Messung in Figur 2 zeigt ähnlich gute Leistungsvorteile des erfindungsgemäßen Katalysators gegenüber den Vergleichskatalysatoren. In Figur 2 sind mit THC3 die an den CO/NOx-Kreuzungspunkten gemessenen Kohlenwasserstoffemissionen, berechnet als Propan, bezeichnet. Die Vorteile des erfindungsgemäßen Katalysators können auf die Kombination der erfindungsgemäßen Merkmale, nämlich Edelmetallplazierung und Verwendung von zwei Cer/Zirkon-Mischoxiden mit unterschiedlichen Zirkonoxidgehalten zurückgeführt werden, wobei das Cer/Zirkon-Mischoxid in der zweiten Schicht einen höheren Zirkonoxidgehalt als dasjenige der ersten Schicht aufweist.

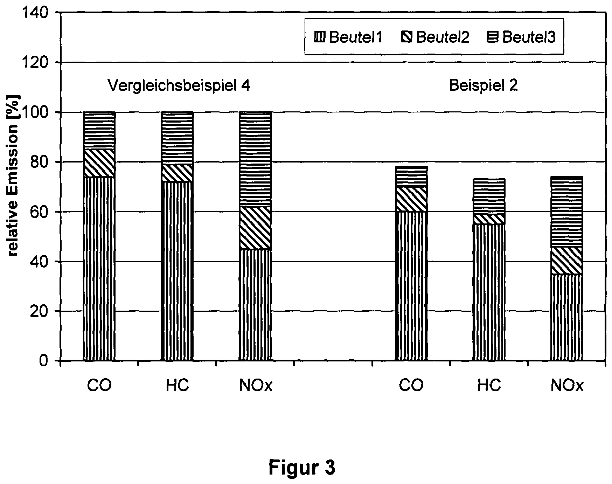

Der zweite Katalysator von Beispiel 2 und der Katalysator von Vergleichsbeispiel 4 wurden an einem Fahrzeug bezüglich ihrer Emissionen beim FTP75-Test untersucht. In Figur 3 sind die gemessenen Emissionswerte relativ zueinander Emissionen dargestellt, wobei die Emissionen des Katalysators vom Vergleichsbeispiel auf 100 gesetzt wurden. Auch bei diesem Test zeigt der erfindungsgemäße Katalysator bessere Werte als der Katalysator von Vergleichsbeispiel 4.

Die vorgestellten die Messungen belegen eine hervorragende Alterungsstabilität der Katalysatoren gemäß der Erfindung. Sie sind deshalb nicht nur im Unterbodenbereich eines Kraftfahrzeuges einsetzbar, sondern können auch als motornahe Startkatalysatoren eingesetzt werden.

## Patentansprüche

1. Doppelschichtiger Dreiweg-Katalysator aufweisend eine erste Schicht auf einem inerten Katalysatorträger aus Keramik oder Metall und eine zweite Schicht, die auf der ersten Schicht abgelagert ist und mit dem zu reinigenden Abgas in direktem Kontakt steht, für die Reinigung der Abgase von Verbrennungsmotoren,
**dadurch gekennzeichnet,**
**dass** beide Schichten jeweils ein aktives Aluminiumoxid und ein Cer/Zirkon-Mischoxid enthalten und beide Oxidmaterialien der ersten Schicht mit Palladium und beide Oxidmaterialien der zweiten Schicht mit Rhodium katalytisch aktiviert sind, wobei das Cer/Zirkon-Mischoxid der zweiten Schicht einen höheren Zirkonoxidgehalt aufweist als das Cer/Zirkon-Mischoxid der ersten Schicht, wobei das Cer/Zirkon-Mischoxid der ersten Schicht ein Gewichtsverhältnis von Ceroxid zu Zirkonoxid von 0,8 bis 1,2 und das Cer/Zirkon-Mischoxid der zweiten Schicht ein Gewichtsverhältnis von Ceroxid zu Zirkonoxid von 0,5 bis 0,1 aufweist.

2. Dreiweg-Katalysator nach Anspruch 1,
**dadurch gekennzeichnet,**
**dass** aktives Aluminiumoxid und Cer/Zirkon-Mischoxid der ersten Schicht zusätzlich mit Strontiumoxid oder Bariumoxid auf ihrer Oberfläche beschichtet sind.

3. Dreiweg-Katalysator nach Anspruch 1,
**dadurch gekennzeichnet,**
**dass** die Cer/Zirkon-Mischoxide der beiden Schichten jeweils mit 1 bis 15 Gew.-% Oxiden, bezogen auf das Gesamtgewicht der Mischoxide, stabilisiert sind, wobei die Oxide jeweils ausgewählt sind aus der Gruppe bestehend aus Eisen, Mangan, Zinn, Titan, Silizium, Yttrium, Lanthan, Praseodym, Neodym, Samarium und Mischungen davon.

4. Dreiweg-Katalysator nach Anspruch 1,
**dadurch gekennzeichnet,**
**dass** das aktive Aluminiumoxid der ersten und zweiten Schicht jeweils mit 1 bis 10 Gew.-% Lanthanoxid, bezogen auf das Gesamtgewicht des Aluminiumoxids stabilisiert ist.

5. Dreiweg-Katalysator nach Anspruch 1,
**dadurch gekennzeichnet,**
**dass** es sich bei dem Katalysatorträger um einen Wabenkörper mit einem Volumen V handelt, der parallele Strömungskanäle für die Abgase des Verbrennungsmotors aufweist, wobei die Wandflächen der Strömungskanäle mit den beiden Katalysatorschichten beschichtet sind und die Konzentration des Palladiums in der ersten Schicht bezogen auf das Volumen des Wabenkörpers zwischen 0,1 und 10 g und die Konzentration des Rhodiums in der zweiten Schicht zwischen 0,01 und 1 g liegt.

6. Dreiweg-Katalysator nach Anspruch 5,
**dadurch gekennzeichnet,**
**dass** in der zweiten Schicht das aktive Aluminiumoxid und das Cer/Zirkon-Mischoxid zusätzlich zu Rhodium noch mit Platin katalytisch aktiviert sind und die Konzentration des Platins bezogen auf das Volumen des Wabenkörpers zwischen 0,01 und 1 g liegt.

7. Verwendung des Dreiweg-Katalysators nach einem der vorstehenden Ansprüche als motornaher Start-Katalysator oder als Haupt-Katalysator im Unterbodenbereich eines mit einem Benzinmotor ausgerüsteten Kraftfahrzeugs zur Reinigung der Abgase des Motors.

## Claims

1. A double-layer three-way catalyst comprising a first layer on an inert catalyst support composed of ceramic or metal and a second layer, which is supported on the first layer and is in direct contact with the exhaust gas to be purified, for purification of the exhaust gases from internal combustion engines,
**characterized in that**
each of said first and said second layers contains an active aluminum oxide and a cerium/zirconium mixed oxide and the two oxide materials of the first layer are catalytically activated by means of palladium and the two oxide materials of the second layer are catalytically activated by means of rhodium, wherein the cerium/zirconium mixed oxide of the second layer has a higher zirconium oxide content than the cerium/zirconium mixed oxide of the first layer, wherein the cerium/zirconium mixed oxide of the first layer has a weight ratio of cerium oxide to zirconium oxide of 0.8 to 1.2 and the cerium/zirconium oxide of the second layer has a weight ratio of cerium oxide to zirconium oxide of 0.5 to 0.1.

2. The three-way catalyst according to claim 1,
**characterized in that**
the active aluminum oxide and cerium/zirconium mixed oxide of the first layer are additionally coated on their surface with strontium oxide or barium oxide.

3. The three-way catalyst according to claim 1,
**characterized in that**
the cerium/zirconium mixed oxides of the two layers are each stabilized with from 1 to 15% by weight of oxides, based on the total weight of the mixed oxides, wherein the oxides are each selected from the group consisting of iron, manganese, tin, titanium, silicon, yttrium, lanthanum, praseodymium, neodymium, samarium and mixtures thereof.

4. The three-way catalyst according to claim 1,
**characterized in that**
the active aluminum oxide of the first and second layers is in each case stabilized with from 1 to 10% by weight of lanthanum oxide, based on the total weight of the aluminum oxide.

5. The three-way catalyst according to claim 1,
**characterized in that**
the catalyst support is a honeycomb body which has a volume V and has parallel flow channels for the exhaust gases from the internal combustion engine, wherein the wall surfaces of the flow channels are coated with the two catalyst layers and the concentration of palladium in the first layer based on the volume of the honeycomb body is from 0.1 to 10 g and the concentration of rhodium in the second layer is from 0.01 to 1 g.

6. The three-way catalyst according to claim 5,
**characterized in that**
in the second layer, the active aluminum oxide and the cerium/zirconium mixed oxide are catalytically activated with platinum in addition to rhodium and the concentration of platinum based on the volume of the honeycomb body is from 0.01 to 1 g.

7. A use of the three-way catalyst according to one of the foregoing claims as primary catalyst close to the engine or as main catalyst in the underbody region of a motor vehicle equipped with a petrol engine for purifying the exhaust gases from the engine.

## Revendications

1. Catalyseur trois-voies à deux couches présentant une première couche sur un porte-catalyseur inerte en céramique ou en métal et une seconde couche qui est déposée sur la première couche et qui est en contact direct avec les gaz d'échappement à épurer, pour l'épuration des gaz d'échappement de moteurs à combustion,
**caractérisé en ce que**
les deux couches contiennent chacune un oxyde d'aluminium actif et un oxyde mixte de cérium/zirconium et les deux matériaux d'oxyde de la première couche sont activés catalytiquement par du palladium et les deux matériaux d'oxyde de la seconde couche sont activés catalytiquement par du rhodium, l'oxyde mixte de cérium/zirconium de la seconde couche présentant une teneur plus élevée en oxyde de zirconium que l'oxyde mixte de cérium/zirconium de la première couche, l'oxyde mixte de cérium/zirconium de la première couche présentant un rapport pondéral de l'oxyde de cérium à l'oxyde de zirconium de 0,8 à 1,2 et l'oxyde mixte de cérium/zirconium de la seconde couche présentant un rapport pondéral de l'oxyde de cérium à l'oxyde de zirconium de 0,5 à 0,1.

2. Catalyseur trois-voies selon la revendication 1,
**caractérisé en ce que**
l'oxyde d'aluminium actif et l'oxyde mixte de cérium/zirconium de la première couche sont en outre recouverts d'oxyde de strontium ou d'oxyde de baryum sur leur surface.

3. Catalyseur trois-voies selon la revendication 1,
**caractérisé en ce que**
les oxydes mixtes de cérium/zirconium des deux couches sont stabilisés chacun par 1 à 15 % d'oxydes par rapport au poids total des oxydes mixtes, les oxydes étant choisis chacun dans le groupe constitué de fer, manganèse, étain, titane, silicium, yttrium, lanthane, praséodyme, néodyme, samarium et des mélanges de ceux-ci.

4. Catalyseur trois-voies selon la revendication 1,
**caractérisé en ce que**
l'oxyde d'aluminium actif de la première et de la seconde couche est à chaque fois stabilisé par 1 à 10 % d'oxyde de lanthane, par rapport au poids total de l'oxyde d'aluminium.

5. Catalyseur trois-voies selon la revendication 1,
**caractérisé en ce que**
le porte-catalyseur est un corps en nid d'abeilles d'un volume V, qui présente des conduits d'écoulement parallèles pour les gaz d'échappement du moteur à combustion, les surfaces des parois des conduits d'écoulement étant recouvertes par les deux couches de catalyseur et la concentration en palladium dans la première couche étant située entre 0,1 et 10 g et la concentration en rhodium dans la seconde couche étant située entre 0,01 et 1 g, par rapport au volume du corps en nid d'abeilles.

6. Catalyseur trois-voies selon la revendication 5,
**caractérisé en ce que**
dans la seconde couche, l'oxyde d'aluminium actif et l'oxyde mixte de cérium/zirconium sont activés, en plus du rhodium, également par du platine et la concentration en platine, par rapport au volume du corps en nid d'abeilles, est située entre 0,01 et 1 g.

7. Utilisation du catalyseur trois-voies selon l'une quelconque des revendications précédentes comme catalyseur de démarrage près du moteur ou comme catalyseur principal dans le bas de caisse d'un véhicule à moteur équipé d'un moteur à essence pour l'épuration des gaz d'échappement du moteur.
